# FASCICULE DE BREVET EUROPEEN

(11) **EP 0 857 274 B1**
(45) Date de publication et mention de la délivrance du brevet: **14.03.2001**
(21) Numéro de dépôt: 96934944.8
(22) Date de dépôt: 21.10.1996
(51) Int. Cl.: F16L 19/08, F16L 19/12, F16L 47/04

(54) **DISPOSITIF DE LIAISON D'UN TUBE A UN EMBOUT**
VORRICHTUNG ZUM VERBINDEN EINES ROHRES MIT EINER KUPPLUNG
DEVICE FOR CONNECTING A TUBE TO A COUPLING

(30) Priorité: 27.10.1995 FR 9512702
(43) Date de publication de la demande: 12.08.1998
(73) Titulaire: LEGRIS S.A., F-35000 Rennes (FR)
(72) Inventeur: BOGARD, Olivier, F-35000 Rennes (FR)
(74) Mandataire: Robert, Jean-Pierre
(86) Numéro de dépôt international: FR9601641
(87) Numéro de publication internationale: WO9715777

(56) Documents cités:
- FR-A- 2 452 050
- GB-A- 828 174
- GB-A- 2 210 123
- US-A- 2 555 591
- US-A- 4 842 548

## Description

La présente invention concerne un dispositif de connexion entre un tronçon de canalisation et un composant fonctionnel ou de raccordement d'une installation de fluide sous pression, permettant la réalisation d'un réseau de distribution de fluide d'une manière simple, rapide, rationnelle et évolutive ou configurable en fonction de l'évolution des besoins de l'utilisateur.

La réalisation d'un réseau de distribution par exemple d'air comprimé dans une usine relève à l'heure actuelle, essentiellement de la plomberie, c'est-à-dire de la mise en place artisanale des canalisations formant ce réseau (découpe à longueur de tuyauteries, formage des tronçons sur le site en fonction des contraintes géométriques du lieu, brasage, soudage ou collage des éléments de raccordement ou de dérivation aux tronçons de tuyauterie). Dans certains cas, on utilise également des dispositifs d'accouplement de tronçons de tube par griffes comme illustrés par le document GB 2 117 072, qui permettent de gagner un peu de temps. La modification ou l'évolution d'une installation de ce type demande une reprise complète de celle-ci pour y insérer telle ou telle dérivation supplémentaire ou en supprimer telle autre. Même pour des évolutions mineures de l'installation telle par exemple que l'augmentation du diamètre d'une dérivation, par suite d'une demande accrue d'énergie sur cette ligne, il faut procéder à des aménagements lourds qui immobilisent longuement l'installation.

Il convient de remédier aux inconvénients des installations actuelles et de leur technique de pose avec des moyens de connexion qui permettent un montage extrêmement rapide d'une installation nouvelle avec la possibilité de modifier aisément sa configuration, la nature ou l'emplacement des éléments fonctionnels qui la constituent.

Ces moyens de connexion permettent de diviser la ou les canalisations qui composent l'installation ou le réseau en éléments ou tronçons modulaires qu'il est aisé de remplacer ou modifier, ces tronçons étant fournis dans une série de longueurs prédéterminées et ne comportant aucun moyen d'extrémité spécifique pour leur raccordement à l'installation. Les moyens de raccordement sont concentrés dans un élément spécifique s'interposant entre l'extrémité d'un tronçon et un organe fonctionnel, cet organe fonctionnel, comportant un corps tubulaire rigide pouvant être réduit à une union ou un bouchon.

Dans ce qui suit on appellera embout toute extrémité cylindrique d'un corps rigide pourvue intérieurement d'un canal de circulation d'un fluide et extérieurement de moyens de bridage (filetage, collerette, ergots radiaux, éléments de came...) coopérant avec des moyens de bridage correspondant d'une bague d'attelage d'un tube. Cette extrémité est limitée axialement par une surface formant une butée pour le tube à raccorder.

Pour répondre aux exigences de raccordement rapide et aisément modifiable, les moyens de connexion d'un tube à un embout sont en forme de manchon cylindrique, dont une section axiale possède des moyens pour sa fixation à l'embout et dont une autre section axiale possède des moyens de retenue du tube par exemple des moyens de connexion par griffes. Dans un tel dispositif le tube ne pénètre pas dans l'embout, ce qui permet un démontage de la liaison sans qu'il soit nécessaire d'extraire le tube de l'embout par un mouvement axial. On peut ainsi réaliser des réseaux de canalisations par tronçons de tubes adjacents les uns aux autres et entre lesquels est interposée une pièce de liaison (possédant un embout pour chaque tronçon). Cette pièce peut assurer d'autres fonctions, en plus de la liaison, telles qu'une dérivation, une fonction de coupure, de détente de la pression du fluide, de purge... En effet, lorsqu'il s'agit de modifier la géométrie du réseau, grâce à ce type de raccordement, on peut extraire du réseau au moins un tronçon de tube latéralement, c'est-à-dire sans avoir à devoir réaliser un mouvement de déboîtement axial entre le tube et les pièces de liaison. Ceci demanderait de démonter ces pièces pour les désolidariser de la structure qui les porte, le réseau étant en général fixé à cette structure par ces pièces.

Cette absence d'emboîtement entre pièces et tubes à l'endroit de leur raccordement forme des points de faiblesse mécanique qui encaissent mal les sollicitations en flexion que peut subir le réseau résultant par exemple des efforts de flambement dûs aux dilatations des tronçons de tube. Il s'ensuit à l'endroit de la liaison une ovalisation du tube, un décentrage de celui-ci qui nuit à la qualité de la connexion et de son étanchéité.

Il est proposé par la présente invention de pallier cet inconvénient par des moyens spécifiques à ce type de connexion, de renforcement de la liaison mécanique entre l'embout et le tube sans nuire à la possibilité de déconnecter les pièces par déplacement latéral.

A cet effet l'invention a donc pour objet un dispositif de jonction d'un tube au corps d'une pièce, comprenant un embout cylindrique appartenant à la pièce, limité par une face frontale et un manchon de raccordement dont une première section comporte des moyens de fixation démontables pour coopérer avec des moyens disposés en correspondance sur l'embout de raccordement et dont une seconde section, adjacente axialement à la première, comporte des moyens s'opposant à l'extraction d'une extrémité du tube placé dans le manchon et en butée contre la face frontale de l'embout. Plus précisément, le manchon est équipé intérieurement d'une bague de guidage de l'extrémité du tube, de diamètre interne sensiblement égal à celui externe du tube, possédant une partie montée à coulissement dans la seconde section du manchon et une seconde partie en projection axiale dans la première section du manchon tandis que l'embout est pourvu d'une gorge creusée dans sa face frontale pour accueillir et centrer l'extrémité libre en projection de la seconde partie de la bague lorsque les moyens de fixation sont en prise.

Ainsi quand les moyens de fixation sont en prise, la bague en question constitue une sorte de boîtier de maintien périphérique de l'extrémité du tube comme le ferait un logement ménagé dans l'embout dans lequel pénétrerait cette extrémité. L'intérêt de cette bague est qu'elle est séparable de l'embout lorsque l'on désaccouple les moyens de fixation, ce qui conserve l'avantage d'une séparation des éléments sans déplacements relatifs axiaux.

Pour améliorer le comportement de cette bague à l'égard du tube, c'est-à-dire le rendre équivalent à un logement de réception que pourrait comporter l'embout, le manchon possède un épaulement formant butée d'engagement et de maintien de l'extrémité libre de la bague de guidage dans la gorge creusée dans la face frontale de l'embout et cette gorge est limitée axialement par un fond formant appui pour l'extrémité libre de la bague lorsque les moyens de fixation sont totalement en prise. Dans ces conditions, il n'existe plus aucun degré de liberté entre la bague et l'embout si bien que cette dernière se comporte comme une prolongation quasiment en une seule pièce de l'embout dans laquelle l'extrémité du tube est engagée.

Dans un mode préféré de réalisation, les surfaces latérales de la gorge sont coniques et convergentes tandis que la surface latérale externe de l'extrémité libre de la bague est conique, d'angle au sommet plus petit que l'angle au sommet de la surface latérale externe de la gorge. On obtient ainsi une fixation de la bague à l'embout lorsque les moyens de fixation sont en prise, absente de tout coincement et donc permettant, lorsque l'on désaccouple les moyens de fixation, une extraction simple et sans effort de la bague hors de la gorge.

Dans une variante de réalisation, la paroi interne de la gorge possède au moins deux embrèvements qui définissent ainsi au moins deux languettes entre eux. En effet il n'est pas besoin que la paroi interne de la gorge soit continue. Elle peut être constituée de deux ou plusieurs languettes qui constituent les moyens de guidage et de centrage de l'extrémité libre de la bague et dont les extrémités libres se situent au niveau de la face frontale de l'embout et constitue la butée d'enfoncement du tube dans le dispositif de jonction de l'invention.

Pour que la bague puisse être extraite de la gorge ménagée dans l'embout lorsque l'on démonte le dispositif de jonction, la bague et le manchon possèdent des moyens de butée opposés à l'épaulement du manchon pour limiter leur coulissement relatif en direction opposée à cet épaulement et rendre la bague imperdable par rapport au manchon.

Pour augmenter cet "encastrement" de l'extrémité du tube dans le dispositif de jonction suivant l'invention, l'orifice d'entrée du manchon est de diamètre intérieur sensiblement égal à celui du tube et forme une portée de guidage pour le tube dont la longueur axiale est telle que la longueur de la seconde section du manchon est au moins égale au diamètre extérieur du manchon.

Enfin, les moyens de retenue du tube étant de manière connue en elle-même formés par une rondelle conique possédant des dents radiales intérieure, la partie extérieure de cette rondelle étant serrée entre la bague et l'épaulement du manchon, la rondelle comporte des orifices de passage pour des protubérances frontales de la bague dirigées vers l'épaulement de sorte que quand les moyens de fixation sont totalement en prise, il existe entre l'épaulement et la bague un jeu supérieur à l'épaisseur de cette partie extérieure de la rondelle conique.

D'autres caractéristiques et avantages de l'invention ressortiront de la description d'un de ses modes de réalisation donnés ci-après à titre d'exemple non limitatif.

Il sera fait référence aux dessins annexés parmi lesquels :
- la figure 1 est une vue en coupe partielle d'un dispositif de jonction selon l'invention,
- la figure 2 est une vue en bout de l'embout cylindrique auquel le tube doit être raccordé,
- la figure 3 est une vue extérieure de la bague mise en oeuvre dans le dispositif de l'invention,
- les figures 4 et 5 sont des vues de détail de la rondelle à griffes de maintien du tube dans le manchon selon l'invention.

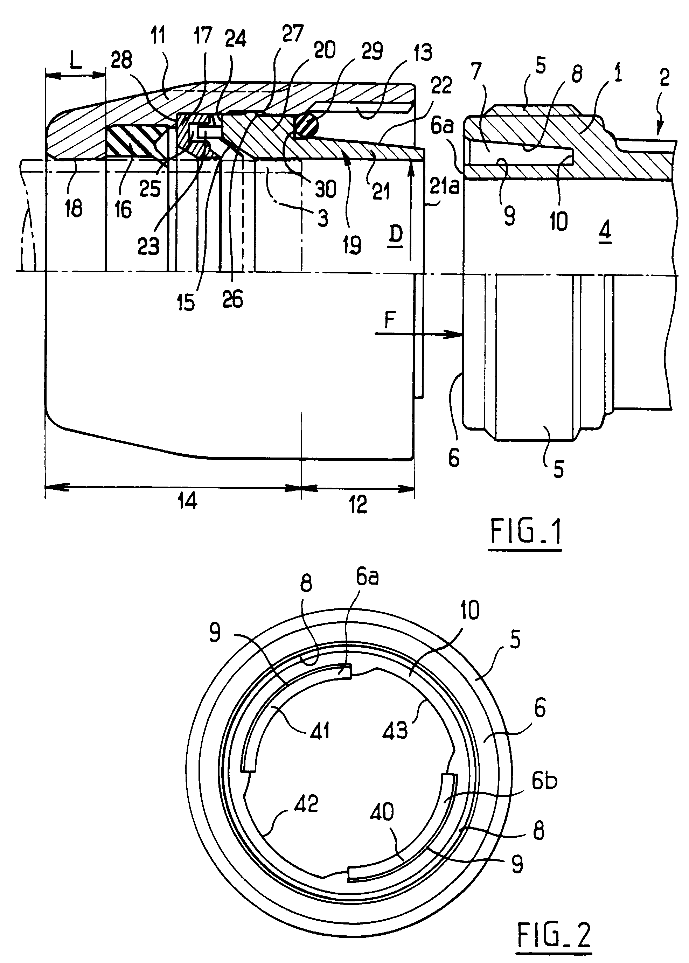

A la figure 1 on a représenté un embout 1 d'une pièce 2 à laquelle on souhaite raccorder l'extrémité d'un tube 3. Cet embout délimite une canalisation 4 centrale et est pourvu extérieurement d'un filetage 5. Il se termine par une surface frontale 6 dans laquelle est creusée une gorge 7 définie par une surface latérale externe 8, une surface latérale interne 9 et un fond 10. La surface latérale externe 8 est conique et converge dans une direction opposée à la surface frontale 6 tandis que la surface latérale interne 9 est également conique mais de pente beaucoup plus légère en divergeant à partir de la surface frontale 6.

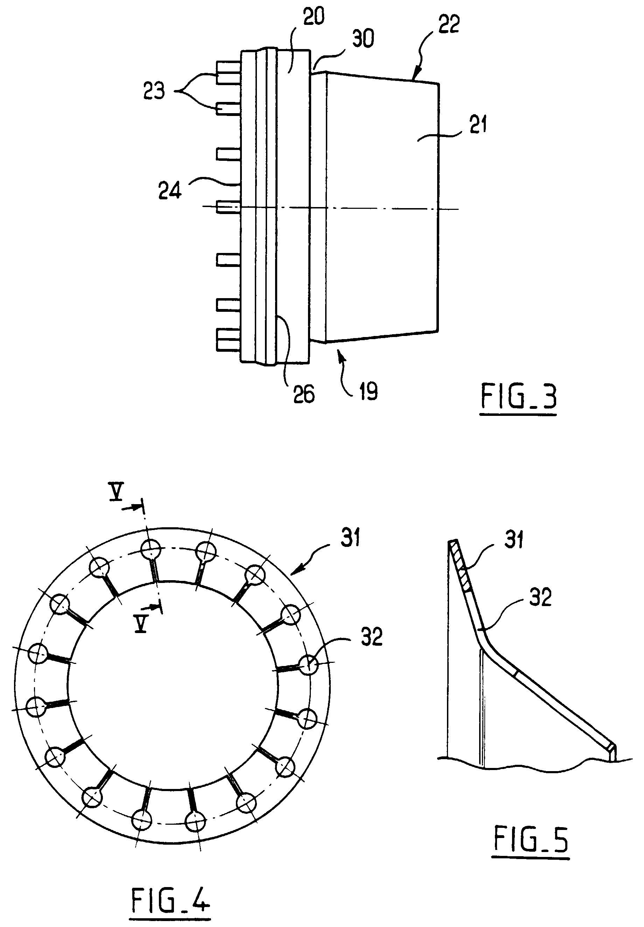

Le dispositif de l'invention représenté à la figure 1 comporte également un manchon 11 de raccordement dont une première section 12 comporte un taraudage intérieur 13 susceptible d'être vissé sur le filetage extérieur 5 de l'embout 1 et une deuxième section 14 adjacente à la première section 12 dans laquelle sont logés d'une part des moyens s'opposant à l'extraction du tube 3 logé dans le manchon 11 et constitué ici par une rondelle 15 qui sera décrite plus en détail en regard des figures 4 et 5 et d'autre part, des moyens d'étanchéité constitués par un joint 16. Une entretoise 17 est disposée entre la rondelle 15 et le joint 16 pour constituer une surface d'appui à cette rondelle sur laquelle elle viendra se plaquer par déformation élastique lorsque les moyens de fixation filetés 5 et 13 seront totalement en prise. L'extrémité libre de la section axiale 14 du manchon définit une ouverture 18 dont la longueur axiale est repérée L sur la figure 1.

Au-delà de la rondelle 15 par rapport à l'entrée 18, le manchon comporte une bague 19 de guidage pour le tube 3. Cette bague 19 possède une première partie 20 au voisinage de la rondelle 15 qui est montée à coulissement à l'intérieur de la seconde section 14 du manchon 11. Elle possède une seconde partie 21 qui prolonge la première partie 20 pour faire saillie à l'intérieur de la première section 12 du manchon 11. Cette seconde partie 21 est limitée par une surface extérieure 22 conique convergente vers la droite du dessin et de pente légèrement inférieure à la pente de la surface conique 8 constituant la surface latérale externe de la gorge 7.

A son extrémité opposée à la saillie 21, la bague 19 comporte une série de doigts axiaux 23 qui s'étendent en direction de l'entretoise 17, au-delà d'une surface terminale 24 et qui pénètrent librement dans des logements 25 prévus en correspondance dans l'entretoise 17 et creusés dans la surface d'appui que présente cette entretoise pour la rondelle 15.

La partie 20 comporte également un épaulement périphérique 26 tourné à l'opposé de la surface 24 pour coopérer avec un épaulement correspondant 27 ménagé dans la seconde section 14 du manchon, cet épaulement 27 étant ici légèrement conique. La bague 19 peut donc coulisser axialement et de manière limitée à l'intérieur du manchon 11 entre la position représentée à la figure 1 dans laquelle les épaulements 26 et 27 sont au contact l'un de l'autre et une position dans laquelle les doigts 23 sont en butée contre le fond des logements 25 de l'entretoise 17, l'entretoise 17 étant elle-même appuyée sur un épaulement 28 du manchon.

On remarquera enfin la présence d'un joint torique 29 qui est placé à la jonction des parties 20 et 21 de la bague 19, à l'extérieure de celle-ci, ce joint 29 étant retenu sur la bague par une surface conique 30 qui en constitue le logement.

La bague 19 possède un diamètre intérieur D sensiblement égal au diamètre extérieur du tube 3. Le plus grand diamètre de la surface latérale interne 9 de la gorge 7 est légèrement inférieur au diamètre intérieur D de la bague 19. Par ailleurs, le diamètre extérieur de la partie 21 mesuré dans le plan de sa surface d'extrémité 21a est sensiblement égal au diamètre de la surface extérieure conique 8 de la gorge 7 mesuré dans le plan du fond 10.

Lorsque l'on souhaite raccorder le tube 3 à la pièce 2, on commence par visser le manchon équipé des éléments décrite ci-dessus sur l'embout 1. La partie 21 de la bague 19 pénètre donc dans la gorge 7 et est centrée par rapport à celle-ci grâce à la paroi conique 8 de la gorge. Lorsque la face 21a de la bague 19 rencontre le fond 10 de la gorge 7, la poursuite du serrage rapproche les fonds des logements 25 des doigts 23 sur lequel finalement ils s'appuient. La bague 19 est alors bloquée dans une position qui est déterminée par le guidage de sa partie 21 dans la gorge 7 et par l'appui de sa surface frontale 21a sur le fond 10 de la gorge. En effet, les jeux de la bague 19 par rapport au manchon 11 sont tels que c'est ce guidage et cet appui qui sont prédominants dans la position définitive prise par la bague 19. Ainsi cette bague joue-t-elle le rôle d'une prolongation solidaire de l'embout 1 puisque sa position est définie par cet embout.

En fin de serrage, la face frontale 6 de l'embout a permis, à l'extérieur de la gorge 7, de comprimer légèrement le joint 29 et est située pour partie à l'intérieur de la bague 19. Cette partie intérieure constitue la butée du tube 3 que l'on introduit dans le manchon après vissage de ce dernier sur l'embout. Comme la portée intérieure de la bague 19 s'étend sur la longueur axiale de la projection 21 et sur une partie au moins de la longueur axiale de la partie 20, cette dernière partie constitue une portée de centrage pour le tube 3 qui se trouve donc correctement en position et pratiquement "encastrée" par rapport à l'embout 1.

Lors du serrage du manchon sur l'embout, l'empilement 17, 19 s'est resserré et a contraint la rondelle 15 à prendre une position plus radiale que sa position de repos. Cette déformation est connue en elle-même et permet aux dents intérieures de cette rondelle 15 de s'étendre sur un diamètre légèrement plus petit que le diamètre extérieur du tube 3. Sur la figure 4 on a représenté l'ébauche plane qui permet de réaliser la rondelle 15, cette ébauche 31 possède une pluralité d'orifice 32 de diamètre et de disposition telles que lorsque la rondelle est mise en forme comme illustré par la coupe de la figure 5, ses orifices 32 peuvent laisser passer avec jeu les doigts 23 de la bague 19. Lors de l'appui de l'extrémité de ces doigts au fond des logements 25 de l'entretoise 17, la surface 24 de la bague 19 ne vient pas serrer fortement la rondelle 25 pour la contraindre à prendre appui sur l'entretoise 17. Au contraire il existe une distance entre l'entretoise 17 et cette surface 24 supérieure à l'épaisseur de la rondelle 15 de sorte qu'il existe un léger jeu pour cette rondelle, jeu qui facilite l'introduction du tube 3.

La figure 2 qui est une vue suivant F, c'est-à-dire en bout de la pièce 2, illustre le fait que la gorge 7 est limitée intérieurement non pas par une paroi continue mais par deux languettes 40, 41 qui portent des portions de surface 9, ces languettes étant séparées par des embrèvements 42, 43 totalement dépourvus de matière. C'est la surface extrême 6a, 6b de ces languettes qui constitue butée pour l'enfoncement du tube 3, ces surfaces extrêmes 6a et 6b étant dans le plan terminal 6 de l'embout 1.

Enfin, selon l'invention, la partie d'entrée du manchon 11 qui délimite l'ouverture 18 par laquelle le tube 3 est introduit, est d'une longueur axiale L telle que la longueur axiale de la seconde section 14 c'est-à-dire celle de la distance qui sépare l'extrémité 6 de l'embout 1 logé dans le manchon 11 lorsque le vissage est complètement achevé de l'extrémité libre de ce manchon, est supérieur au diamètre D du tube. On améliore ainsi l'encastrement du tube dans le dispositif de jonction s'opposant ainsi aux déformations que ce tube pourrait subir du fait des sollicitations de flexion et de flambement qu'il pourrait subir. La portée 18 de l'entrée du manchon peut être divisée en une multitude de secteurs séparés par des rainures axiales.

L'invention peut bien entendu être réalisée de manière différente. En particulier l'entretoise 17 peut ne pas exister, les doigts 23 s'appuyant directement sur l'épaulement 28 avec la rondelle 15 entre eux.

## Revendications

1. Dispositif de jonction d'un tube (3) au corps d'une pièce (2) comprenant un embout (1) cylindrique appartenant à la pièce limité par une face frontale (6) et un manchon (11) de raccordement dont une première section (12) comporte des moyens (13) de fixation démontables pour coopérer avec des moyens (5) disposés en correspondance sur l'embout (1) de raccordement, et dont une seconde section (14) adjacente axialement à la première (13) comporte des moyens (15) s'opposant à l'extraction d'une extrémité du tube (3) placé dans le manchon (11), caractérisé en ce que l'extrémité du tube (3) est en butée contre la face frontale (6) de l'embout (1), et en ce que le manchon (11) est équipé intérieurement d'une bague de guidage (19) de l'extrémité du tube (3), de diamètre (D) interne sensiblement égal à celui externe du tube (3), possédant une partie (20) montée à coulissement dans la seconde section (14) du manchon (11) et une seconde partie (21) en projection axiale dans la première section (12) du manchon (11) tandis que l'embout (1) est pourvu d'une gorge (7) creusée dans sa face frontale (6) pour accueillir et centrer l'extrémité libre de la seconde partie en projection (21) de la bague (19) lorsque les moyens de fixation (5, 13) sont en prise.

2. Dispositif selon la revendication 1, caractérisé en ce que le manchon (11) possède un épaulement (28) formant au moins indirectement butée d'engagement et de maintien de l'extrémité libre (21a) de la bague de guidage (19) dans la gorge (7) creusée dans la face frontale (6) de l'embout (1).

3. Dispositif selon la revendication 1, caractérisé en ce que la gorge (7) est limitée axialement par un fond (10) formant appui pour l'extrémité libre (21a) de la bague (19) lorsque les moyens (5, 13) de fixation sont totalement en prise.

4. Dispositif selon la revendication 1, caractérisé en ce que les surfaces latérales (8, 9) de la gorge (7) sont coniques et convergentes.

5. Dispositif selon la revendication 4, caractérisé en ce que la surface latérale externe (22) de la partie (21) de la bague (19) est conique d'angle au sommet plus petit que l'angle au sommet de la surface latérale externe (8) de la gorge (7).

6. Dispositif selon l'une des revendications précédentes, caractérisé en ce que la paroi interne (9) de la gorge possède au moins deux embrèvements (42, 43) définissant entre eux au moins deux languettes (40, 41).

7. Dispositif selon l'une des revendications 2 à 6, caractérisé en ce que la bague (19) et le manchon (11) possèdent des moyens de butée (26, 27) opposés à l'épaulement (28) du manchon pour limiter leur coulissement relatif en direction opposée à l'épaulement (28) et rendre la bague (19) imperdable par rapport au manchon.

8. Dispositif selon l'une des revendications précédentes, caractérisé en ce que l'orifice (18) d'entrée du manchon (11) est de diamètre intérieur (D) sensiblement égal à celui externe du tube (3) et forme une portée de guidage pour le tube (3) dont la longueur axiale (L) est telle que la longueur de la seconde section (14) du manchon (11) est au moins égale au diamètre extérieur (D) du tube.

9. Dispositif selon l'une des revendications 3 à 5, caractérisé en ce que les moyens de retenue du tube étant de manière connue en elle-même formés par une rondelle (15) conique possédant des dents radiales intérieures, la partie extérieure de la rondelle étant serrée au moins indirectement entre une surface terminale (24) de la bague (19) et l'épaulement (28) du manchon, la rondelle (15) comporte des orifices (31) de passage pour des protubérances (23) frontales de la bague (19) dirigée vers l'épaulement (28) de sorte que quand les moyens de fixation (5, 13) sont totalement en prise, il existe entre les surfaces de serrage un jeu supérieur à l'épaisseur de la rondelle (15) conique.

## Patentansprüche

1. Vorrichtung zum Verbinden eines Rohres (3) mit dem Gehäuse eines Teiles (2), mit einem zum Teil gehörenden, zylindrischen Ansatzstück (1), das von einer Stirnseite (6) begrenzt ist, und mit einer Verbindungsmuffe (11), von der ein erster Abschnitt (12) abnehmbare Befestigungsmittel (13) hat, um mit Mitteln (5) zusammenzuwirken, die entsprechend an dem Verbindungsansatzstück (1) angeordnet sind, und von der ein zweiter, axial an den ersten Abschnitt (12) angrenzender Abschnitt (14) Mittel (15) hat, die sich dem Herausziehen eines Endes des in der Muffe (11) angeordneten Rohres (3) widersetzen, dadurch **gekennzeichnet**, daß das Ende des Rohres (3) an die Stirnseite (6) des Ansatzstückes (1) anstößt und daß die Muffe (11) innen mit einem Führungsring (19) zum Führen des Endes des Rohres (3) versehen ist, der einen Innendurchmesser (D) hat, der im wesentlichen gleich dem Außendurchmesser des Rohres (3) ist, sowie einen Abschnitt (20), der in dem zweiten Abschnitt (14) der Muffe (11) verschiebbar ist, und einen zweiten Abschnitt (21) hat, der axial in den ersten Abschnitt (12) der Muffe (11) hineinragt, wohingegen das Ansatzstück (1) mit einer in seiner Stirnseite (6) ausgehöhlten Nut (7) versehen ist, um das freie Ende des vorspringenden zweiten Abschnittes (21) des Ringes (19) aufzunehmen und zu zentrieren, wenn die Befestigungsmittel (5, 13) im Eingriff sind.

2. Vorrichtung nach Anspruch 1, dadurch **gekennzeichnet**, daß die Muffe (11) eine Schulter (28) hat, die wenigstens indirekt einen Eingriffs- und Halteanschlag für das freie Ende (21a) des Führungsringes (19) in der Nut (7) bildet, die in der Stirnseite (6) des Ansatzstückes (1) ausgehöhlt ist.

3. Vorrichtung nach Anspruch 1, dadurch **gekennzeichnet**, daß die Nut (7) axial von einem Boden (10) begrenzt ist, der einen Anschlag für das freie Ende (21a) des Ringes (19) bildet, wenn die Befestigungsmittel (5, 13) vollkommen im Eingriff sind.

4. Vorrichtung nach Anspruch 1, dadurch **gekennzeichnet**, daß die Mantelflächen (8, 9) der Nut (7) kegelförmig sind und sich verjüngen.

5. Vorrichtung nach Anspruch 4, dadurch **gekennzeichnet**, daß die äußere Mantelfläche (22) des Abschnittes (21) des Ringes (19) kegelförmig ist und einen Spitzenwinkel hat, der kleiner als der Spitzenwinkel der äußeren Mantelfläche (8) der Nut (7) ist.

6. Vorrichtung nach einem der vorhergehenden Ansprüche, dadurch **gekennzeichnet**, daß die Innenwand (9) der Nut mindestens zwei Aussparungen (42, 43) hat, die zwischen sich mindestens zwei Federn (40, 41) begrenzen.

7. Vorrichtung nach einem der Ansprüche 2 bis 6, dadurch **gekennzeichnet**, daß der Ring (19) und die Muffe (11) der Schulter (28) der Muffe entgegengesetzte Anschlagmittel (26, 27) haben, um ihr relatives Gleiten in einer der Schulter (28) entgegengesetzten Richtung zu begrenzen und den Ring (19) gegenüber der Muffe unverlierbar zu machen.

8. Vorrichtung nach einem der vorhergehenden Ansprüche, dadurch **gekennzeichnet**, daß die Eintrittsöffnung (18) der Muffe (11) einen Innendurchmesser (D) hat, der im wesentlichen gleich dem Außendurchmesser des Rohres (3) ist, und für das Rohr (3) eine Führungsfläche bildet, deren axiale Länge (L) derart bemessen ist, daß die Länge des zweiten Abschnittes (14) der Muffe (11) mindestens gleich dem Außendurchmesser (D) des Rohres ist.

9. Vorrichtung nach einem der Ansprüche 3 bis 5, dadurch **gekennzeichnet**, daß die Rückhaltemittel zum Festhalten des Rohres auf eine an sich bekannte Art aus einer kegelförmigen Ringscheibe (15) gebildet sind, die eine radiale Innenverzahnung hat, wobei der äußere Teil der Ringscheibe wenigstens indirekt zwischen eine Endfläche (24) des Ringes (19) und die Schulter (28) der Muffe eingespannt wird, wobei die Ringscheibe (15) Durchgangsöffnungen (31) für frontale Vorsprünge (23) des auf die Schulter (28) hin gerichteten Ringes (19) hat, so daß, wenn die Befestigungsmittel (5, 13) vollkommen im Eingriff sind, zwischen den Spannflächen ein Spiel vorhanden ist, das größer als die Dicke der kegelförmigen Ringscheibe (15) ist.

## Claims

1. A junction device for joining a tube (3) to the body of a part (2) including a cylindrical endpiece (1) belonging to the part and defining a end face (6), and a coupling sleeve (11) having a first section (12) including releasable fastener means (13) for co-operating with corresponding means (5) on the coupling endpiece (1) and having a second section (14) axially adjacent to the first section (12) and including means (15) for opposing extraction of an end of the tube (3) placed in the sleeve (11) the device being characterized in that the end of the tube is in abutment against the end face (6) of the endpiece (1) and in that the sleeve (11) is internally fitted with a guide ring (19) for guiding the end of the tube (3), the inside diameter (D) of the ring being substantially equal to the outside diameter of the tube (3), the ring possessing a first portion (20) mounted to slide in the second section (14) of the sleeve (11) and a second portion (21) projecting axially into the first section (12) of the sleeve (11), and the endpiece (1) being provided with a groove (7) formed in its end face (6) to receive and center the free end of the projecting second portion (31) of the ring (19) when the fastener means (5, 13) are in engagement.

2. A device according to claim 1, characterized in that the sleeve (11) possesses a shoulder (28) forming at least indirectly an abutment for engaging and holding the free end (21a) of the guide ring (19) in the groove (7) formed in the end face (6) of the endpiece (1).

3. A device according to claim 1, characterized in that the groove (7) is axially defined by a bottom (10) forming a bearing surface for the free end (21a) of the ring (19) when the fastener means (5, 13) are fully engaged.

4. A device according to claim 1, characterized in that the side surfaces (8, 9) of the groove (7) are conical and converging.

5. A device according to claim 4, characterized in that the outer side surface (22) of the second portion (21) of the ring (19) is conical having an angle at the apex that is smaller than the angle at the apex of the outer side surface (8) of the groove (7).

6. A device according to any preceding claim, characterized in that the inner wall (9) of the groove posses at least two recesses (42, 43) together defining at least two tongues (40, 41).

7. A device according to any one of claims 2 to 6, characterized in that the ring (19) and the sleeve (11) possess abutment means (26, 27) remote from the shoulder (28) of the sleeve to limit relative sliding therebetween away from the shoulder (28), thereby causing the ring (19) to be held captive relative to the sleeve.

8. A device according to any preceding claim, characterized in that the inlet orifice (18) of the sleeve (11) has an inside diameter (D) substantially equal to the outside diameter of the tube (3) and forming a guiding bearing surface for the tube (3) over an axial length (L) that is such that the length of the second section (14) of the sleeve (11) is not less than the outside diameter (D) of the tube.

9. A device according to any one of claims 3 to 5, characterized in that the tube retaining means are conventionally formed by a conical washer (15) possessing inside radial teeth, the outside portion of the washer being clamped at least indirectly between an end surface (24) of the ring (19) and the shoulder (28) of the sleeve, the washer (15) including orifices (31) for passing end projections (23) on the ring (19) extending towards the shoulder (28) such that when the fastener means (5, 13) are fully engaged, there exists between the clamping surfaces clearance greater than the thickness of the conical washer (15).
